# NEW EUROPEAN PATENT SPECIFICATION

(11) **EP 2 142 730 B2**
(45) Date of publication and mention of the opposition decision: **23.09.2020**
(45) Mention of the grant of the patent: 02.08.2017
(21) Application number: 08737341.1
(22) Date of filing: 26.03.2008
(51) Int. Cl.: E05B 85/16, E05B 17/10, B60Q 1/26, B60Q 1/32

(54) **VEHICLE HANDLE WITH A LIGHTING DEVICE**
FAHRZEUGGRIFF MIT BELEUCHTUNGSVORRICHTUNG
POIGNÉE DE VÉHICULE AVEC DISPOSITIF D'ÉCLAIRAGE

(30) Priority: 29.03.2007 IT MI20070629
(43) Date of publication of application: 13.01.2010
(60) Divisional application: 17183581.2
(73) Proprietor: U-Shin Italia S.p.A., 10044 Pianezza (IT)
(72) Inventor: SAVANT, Marco, I-10091 Alpignano (TO) (IT); AUBRY, Anthony, F-94042 Créteil Cedex (FR)
(74) Representative: Prinz & Partner mbB
(86) International application number: PCT/IB2008/000710
(87) International publication number: WO 2008/120067

(56) References cited:
- EP-A- 0 931 698
- EP-A- 1 609 674
- DE-A1- 4 212 291
- DE-A1- 19 809 716
- DE-A1- 19 843 594
- DE-A1- 19 843 594
- DE-A1- 19 947 752
- DE-U1- 29 921 248
- US-A- 4 467 402

## Description

The present invention relates to a handle for doors and the like, and in particular to a handle with a lever which can be employed for unlocking and simultaneously opening the door of a motor vehicle and is provided with a device for illuminating the space around the handle.

DE 10039685 discloses a handle provided with a lever in which a lighting device is arranged, however the electric connection for powering said device is relatively complex, since the lever is mobile and must be accurately sealed from water.

The lever of the handle disclosed in DE 19809716 is provided with an optical coupling device arranged in the lower portion of the lever for transmitting downwards the light emitted by a lighting device arranged in the door.

DE 19822733 discloses a handle with an eyelid-like lever, i.e. with a substantially horizontal rotation axis, which hides a lighting device arranged in the door. DE 19822733 also discloses a handle with a traditional lever, i.e. with a rotation axis substantially parallel to the rotation axis of the door, which lever is provided with lighting devices, with the same disadvantages of the handle of DE 10039685.

DE 19757085 discloses a lighting device arranged in the door in a position relatively far from the handle, which therefore requires an optical guide for transmitting the light emitted by said device toward the handle.

Also EP 1060948 discloses a lighting device which transmits the light toward the handle by means of optical guides.

Due to the particular arrangement of the levers, the lighting devices and the optical guides, said known handles are asymmetric, so that two different kinds of handles must be manufactured for the left and right sides, respectively, of a motor vehicle. Furthermore, the opening for the illumination is often visible from the outside, with a consequent reduction of the aesthetics of the motor vehicle. The use of optical guides, sometimes very long, requires more powerful lighting device for compensating the attenuation due to the optical guide, thereby causing a higher energy consumption.

It is therefore an object of the present invention to provide a handle free from said disadvantages. Said object is achieved with a handle, whose main features are disclosed in the first claim, while other features are disclosed in the remaining claims.

Thanks to the particular arrangement and structure of the lighting device, the handle according to the present invention can be completely or almost completely made of symmetric components, so that it can be mounted both on the left and right sides of a motor vehicle.

Furthermore, said lighting device is preferably arranged in a position hidden behind the lever, so as to not spoil the aesthetics of the handle, even if it directly illuminates the space around it, in particular the recess for the user's hand and/or the ground under the door.

According to a particular aspect of the invention, the lighting device can be snap-fastened, preferably in a removable manner, to the frame of the handle by operating from the outside of the door, so as to simplify the assembly and maintenance procedures of the handle.

The light of the lighting device can be transmitted with short optical guides or even without optical guides, so as to improve the lighting efficiency. The lever can also be provided with a particular opaque cover with openings for orienting the light of the lighting device only where required.

Further advantages and features of the handle according to the present invention will become clear to those skilled in the art from the following detailed and non-limiting description of embodiments thereof with reference to the attached drawings, wherein:
- figure 1 shows a front view of the first embodiment of the handle;
- figure 2 shows a view cross-sectioned along plane II-II of figure 1;
- figure 3 shows the handle of figure 2 during its assembly;
- figure 4 shows a front view of the second embodiment of the handle; this embodiment not being covered by the claims;
- figure 5 shows a view cross-sectioned along plane V-V of figure 4;
- figure 6 shows a front view of the third embodiment of the handle; and
- figure 7 shows a view cross-sectioned along plane VII-VII of figure 6.

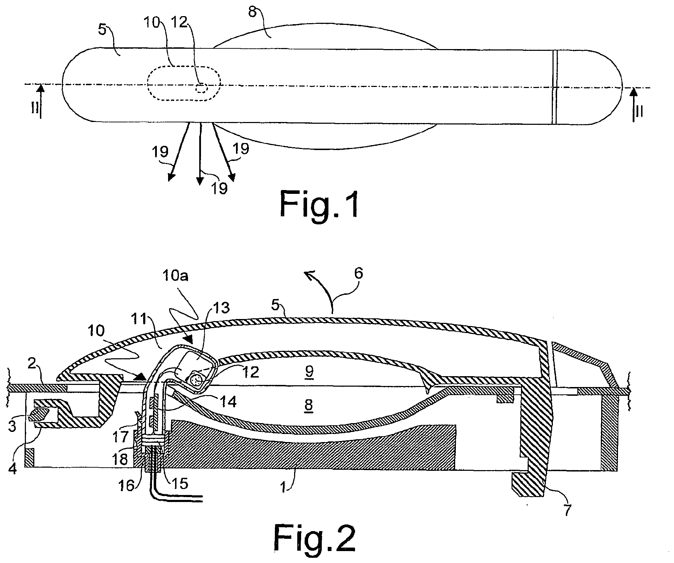

Referring to figures 1 and 2, it is seen that the handle according to the first embodiment of the present invention comprises in a known way a frame 1 suitable to be fixed for example behind the outer surface of a door 2 of a motor vehicle. Frame 1 is provided with a transversal pin 3 acting as a fulcrum, around which a shaped extension 4 of a lever 5 suitable for being pulled outwards in the direction of arrow 6 for opening door 2 can rotate. Lever 5 thus rotates around an axis substantially parallel to the rotation axis of door 2. The other end of lever 5 is provided with an appendix 7 which protrudes into frame 1 for the mechanical connection to the unlocking mechanism (not shown in the figures) of door 2, so that the latter can be opened by pulling lever 5. Door 2 and/or lever 5 are shaped for obtaining recesses 8 and/or 9, respectively, arranged between frame 1 and lever 5 for the hand of the user which must pull lever 5.

According to the invention a lighting device 10 is fixed to frame 1 and crosses an opening, preferably closed partially by a gasket (not shown in the figures), made in the outer surface of door 2, in particular the same opening crossed by the shaped extension 4 of lever 5. The lighting device 10 is thus preferably arranged between fulcrum 3 and the middle of lever 5, however it could also be arranged close to appendix 7 or in the opening made for the latter in the outer surface of door 2. The outer portion 10a of the lighting device 10, i.e. the portion outside door 2, protrudes behind lever 5 and is arranged at least partially in recess 9 of lever 5. The outer portion 10a of the lighting device 10 is further housed at least partially in a seat 11 which is made in lever 5 and is open toward frame 1. Lever 5 is symmetric with respect to a longitudinal median plane, in particular plane II-II. The lighting device 10 is crossed by said median plane and its outer portion 10a is provided with at least one lamp 12 protruding into recess 9 of lever 5. Lamp 12 is for example a LED mounted on a board 13 connected by means of conductors to a control circuit 14. Board 13 and the control circuit 14 are arranged in the housing of the lighting device 10, which is sealed and completely transparent. The control circuit 14 is in turn connected to a plug 15 which is provided with gaskets and is suitable for being coupled electrically and mechanically with a socket 16. For this purpose, plug 15 and socket 16 are provided with a snap-coupling 17 for fixing in a preferably removable manner the lighting member 10 to frame 1. Also plug 16 is provided with a snap-coupling 18 for being fixed to frame 1 preferably in a removable manner. Board 13 is substantially parallel to the longitudinal median plane of lever 5, so that light 19 emitted by lamp 12 is turned only toward one side of said median plane, in particular downwards.

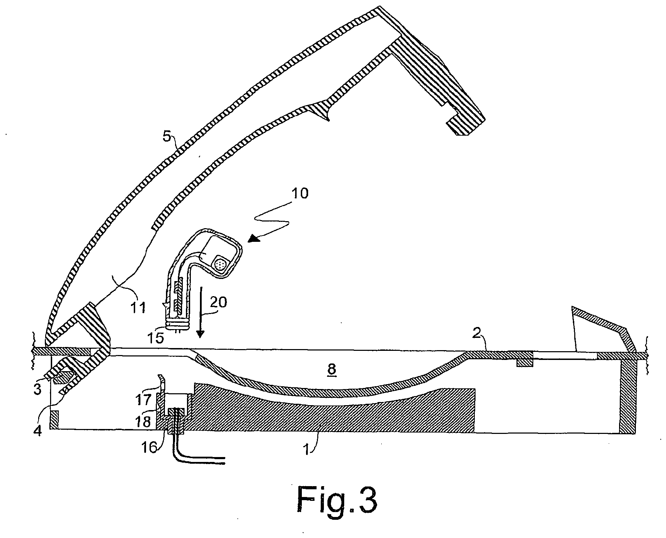

Referring to figure 3, it is seen that during the assembly of the handle according to the present invention the lighting device 10 is inserted for being fixed to frame 1 from the outside of door 2 in a transversal direction 20 with respect to the position of the outer surface of door 2, with lever 5 rotated outwards and with frame 1 already fixed into door 2, until plug 15 and socket 16 are mutually joined by means of snap-coupling 17. For disassembling the lighting device 10 it is sufficient to insert, a point, for example of a screwdriver, into the opening made in door 2 for the lighting device 10, so as to unlock snap-coupling 17 and allow the outward extraction of the lighting device 10.

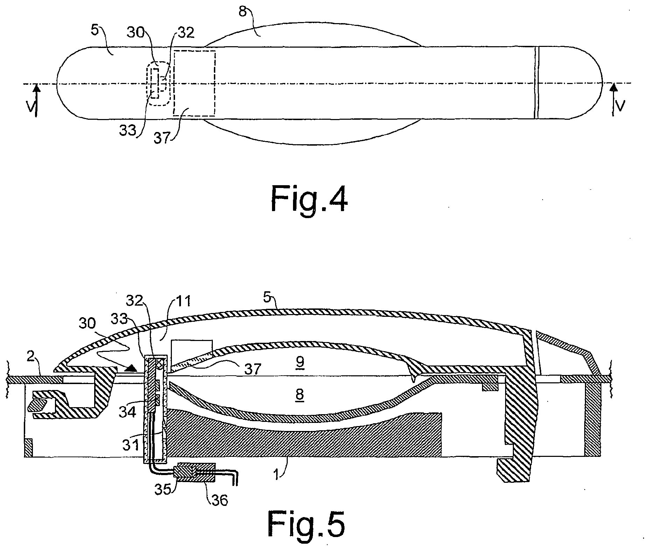

Referring to figures 4 and 5, it is seen that the handle according to the second embodiment comprises again a lighting device 30 which protrudes into seat 11 made in lever 5 and crosses an opening made in the outer surface of door 2 for being fixed to frame 1 by means of a snap-coupling 31. The lighting device 30 is provided with at least one lamp 32 mounted on a board 33 which includes a control circuit 34 and is connected to a plug 35 inserted into a socket 36 which can also be separated from frame 1. A window 37 preferably closed by a transparent wall or a prism is made in lever 5 along a surface turned toward recesses 8 and/or 9, i.e. toward door 2, so as to transmit the light emitted by lamp 32 toward recess 8, as well as upwards and/or downwards, according to the position of obscuring means, if any, arranged on lever 5. Window 37 is arranged beside seat 11 of lever 5. Board 33 is substantially perpendicular to the median plane of lever 5.

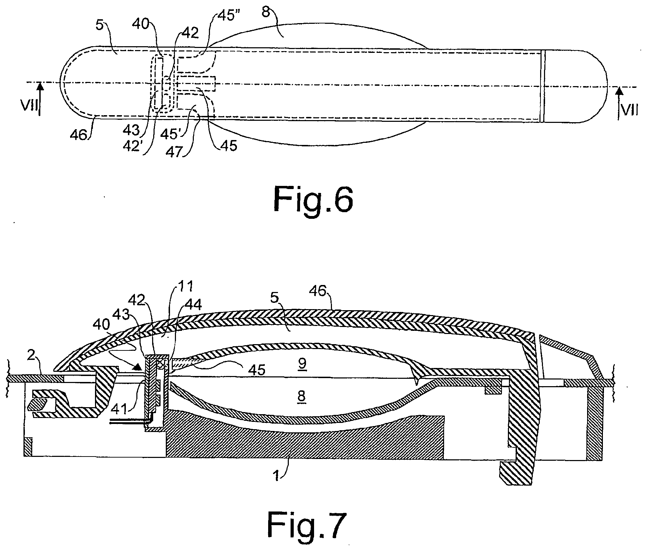

Referring to figures 6 and 7, it is seen that the handle according to the third embodiment of the present invention comprises a lighting device 40 which protrudes into seat 11 made in lever 5 and which may also be made of a single piece with frame 1. In particular, the lighting device 40 comprises a cavity which is closed by a cover 41 and houses two lamps 42, 42' mounted on at least one board 43. The first lamp 42 is arranged along the median plane of lever 5 while the second lamp 42' is arranged on a side of this plane, in particular under it. The lighting device 40 is provided with a transparent portion 44 for transmitting the light emitted by lamps 42, 42' toward at least two, in particular three optical guides 45, 45', 45" arranged side by side in lever 5 for transmitting said light toward recesses 8 and/or 9, downwards and upwards, respectively. Lever 5 is provided with an opaque cover 46 provided with a window 47 arranged in correspondence with the optical guide 45' turned downwards, so as to transmit light downwards, not upwards. For employing the handle according to the third embodiment on the opposite side of a motor vehicle, the opaque cover 46 can be substituted with a similar cover, but provided with a window on the opposite side with respect to the median plane of lever 5, and a board provided with lamps arranged in a specular manner compared with lamps 42, 42' mounted on board 43 can be inserted into the lighting device 40.

Possible modifications and/or additions may be made by those skilled in the art to the hereinabove disclosed and illustrated embodiments while remaining within the scope of the following claims.

## Claims

1. Handle comprising a lever (5) and a frame (1) which lever (5) can rotate with respect to said frame (1) to be fixed to the door (2) of a vehicle, which frame (1) is provided with a lighting device (10; 30; 40) for illuminating a space around the handle (2), **characterized in that** the lighting device (10; 30; 40) is provided with an outer portion (10a) which is housed at least partially in a seat (11) made in the lever (5), wherein the outer portion (10a) of the lighting device (10) is arranged at least partially in a recess (9) which is made in the lever (5) and is arranged between the frame (1) and the lever (5), wherein the outer portion (10a) of the lighting device (10) being provided with at least one lamp (12) protruding into the recess (9) of the lever (5), and wherein the lighting device (10; 30) is fixed to the frame (1) by means of a snap-coupling (17; 31).

2. Handle according to the previous claim, **characterized in that** the rotation axis of the lever (5) is substantially parallel to the rotation axis of the door (2).

3. Handle according to the previous claim, **characterized in that** the lighting device (10; 30) is fixed to the frame (1) in a removable manner.

4. Handle according to one of the previous claims, **characterized in that** the seat (11) of the lever (5) for the lighting device (10; 30; 40) is open toward the frame (1).

5. Handle according to one of the previous claims, **characterized in that** the lighting device (10; 30; 40) is arranged between the fulcrum (3) and the middle of the lever (5).

6. Handle according to one of the previous claims, **characterized in that** the lever (5) is symmetric with respect to a longitudinal median plane.

7. Handle according to the previous claim, **characterized in that** the lighting device (10; 30; 40) is crossed by said median plane.

8. Handle according to one of the previous claims, **characterized in that** at least one portion of the casing of the lighting device (10; 30; 40) is transparent.

9. Handle according to one of the previous claims, **characterized in that** the lighting device (10; 30; 40) is provided with at least one lamp (12; 32; 42, 42') mounted on a board (13; 33; 43).

10. Handle according to the previous claim, **characterized in that** said board (13) is substantially parallel to the longitudinal median plane of the lever (5).

11. Handle according to the previous claim, **characterized in that** the light (19) emitted by the lighting device (10) is turned only toward one side of said median plane.

12. Handle according to claim 9, **characterized in that** said board (33; 43) is substantially perpendicular to the longitudinal median plane of the lever (5).

13. Handle according to one of the previous claims, **characterized in that** the lighting device (10; 30) is provided with a plug (15; 35) suitable for being electrically and mechanically coupled with a socket (16; 36).

14. Handle according to the previous claim, **characterized in that** the socket (16) is provided with a snap-coupling (18) for being fixed to the frame (1).

15. Handle according to one of the previous claims, **characterized in that** the lighting device (10; 30; 40) can be inserted from the outside and fixed to the frame (1) in a transversal direction (20) with respect to the position of outer surface of the door (2).

16. Handle according to one of the previous claims, **characterized in that** the lighting device (40) houses a first lamp (42) arranged along the median plane of the lever (5) and a second lamp (42') arranged on one side of this plane.

17. Handle comprising a lever (5) and a frame (1) which lever (5) can rotate with respect to said frame (1) to be fixed to the door (2) of a vehicle, which frame (1) is provided with a lighting device (10; 30; 40) for illuminating a space around the handle (2), **characterized in that** the lighting device (10; 30; 40) is provided with an outer portion (10a) which is housed at least partially in a seat (11) made in the lever (5), wherein the lever (5) comprises at least two optical guides (45, 45', 45") arranged side by side for transmitting the light emitted by the lighting device (42).

18. Handle according to the previous claim, **characterized in that** the lever (5) comprises three optical guides (45, 45', 45") turned towards a recess (8) made in the door (2) and/or the recess (9) of the lever (5), downwards and upwards, respectively.

19. Handle according to the previous claim, **characterized in that** the lever (5) is provided with an opaque cover (46) provided with at least one window (47) arranged in correspondence with an optical guide (45').

## Patentansprüche

1. Griff, der einen Hebel (5) und einen Rahmen (1) umfasst, wobei sich der Hebel (5) in Bezug auf den Rahmen (1), der an der Tür (2) eines Fahrzeugs zu befestigen ist, drehen kann, wobei der Rahmen (1) mit einer Beleuchtungsvorrichtung (10; 30; 40) zum Ausleuchten eines Raumes um den Griff (2) versehen ist, **dadurch gekennzeichnet, dass** die Beleuchtungsvorrichtung (10; 30; 40) mit einem äußeren Abschnitt (10a) versehen ist, der zumindest teilweise in einer Aufnahme (11) untergebracht ist, die in dem Hebel (5) ausgeführt ist, wobei der äußere Abschnitt (10a) der Beleuchtungsvorrichtung 10) zumindest teilweise in einer Aussparung (9) angeordnet ist, die in dem Hebel (5) ausgeführt ist und zwischen dem Rahmen (1) und dem Hebel (5) angeordnet ist, wobei der äußere Abschnitt (10a) der Beleuchtungsvorrichtung (10) mit wenigstens einer Leuchte (12) versehen ist, die in die Aussparung (9) des Hebels (5) ragt, und wobei die Beleuchtungsvorrichtung (10; 30) mittels einer Schnappkupplung (17; 31) am Rahmen (1) befestigt ist.

2. Griff nach dem vorstehenden Anspruch, **dadurch gekennzeichnet, dass** die Drehachse des Hebels (5) im Wesentlichen parallel zur Drehachse der Tür (2) ist.

3. Griff nach dem vorstehenden Anspruch, **dadurch gekennzeichnet, dass** die Beleuchtungsvorrichtung (10; 30) in lösbarer Weise am Rahmen (1) befestigt ist.

4. Griff nach einem der vorstehenden Ansprüche, **dadurch gekennzeichnet, dass** die Aufnahme (11) des Hebels (5) für die Beleuchtungsvorrichtung (10; 30; 40) zum Rahmen (1) hin offen ist.

5. Griff nach einem der vorstehenden Ansprüche, **dadurch gekennzeichnet, dass** die Beleuchtungsvorrichtung (10; 30; 40) zwischen dem Drehpunkt (3) und der Mitte des Hebels (5) angeordnet ist.

6. Griff nach einem der vorstehenden Ansprüche, **dadurch gekennzeichnet, dass** der Hebel (5) in Bezug auf eine Längsmittelebene symmetrisch ist.

7. Griff nach dem vorstehenden Anspruch, **dadurch gekennzeichnet, dass** die Beleuchtungsvorrichtung (10; 30; 40) von der Mittelebene gekreuzt wird.

8. Griff nach einem der vorstehenden Ansprüche, **dadurch gekennzeichnet, dass** wenigstens ein Abschnitt des Gehäuses der Beleuchtungsvorrichtung (10; 30; 40) transparent ist.

9. Griff nach einem der vorstehenden Ansprüche, **dadurch gekennzeichnet, dass** die Beleuchtungsvorrichtung (10; 30; 40) mit wenigstens einer Leuchte (12; 32; 42; 42') versehen ist, die auf einer Platine (13; 33; 43) montiert ist.

10. Griff nach dem vorstehenden Anspruch, **dadurch gekennzeichnet, dass** die Platine (13) im Wesentlichen parallel zur Längsmittelebene des Hebels (5) ist.

11. Griff nach dem vorstehenden Anspruch, **dadurch gekennzeichnet, dass** das von der Beleuchtungsvorrichtung (10) emittierte Licht (19) nur zu einer Seite der Mittelebene hin gewandt ist.

12. Griff nach Anspruch 9, **dadurch gekennzeichnet, dass** die Platine (33; 43) im Wesentlichen senkrecht zur Längsmittelebene des Hebels (5) ist.

13. Griff nach einem der vorstehenden Ansprüche, **dadurch gekennzeichnet, dass** die Beleuchtungsvorrichtung (10; 30) mit einem Stecker (15; 35) versehen ist, der dazu geeignet ist, elektrisch und mechanisch mit einer Buchse (16; 36) gekoppelt zu werden.

14. Griff nach dem vorstehenden Anspruch, **dadurch gekennzeichnet, dass** die Buchse (16) zur Befestigung am Rahmen (1) mit einer Schnappkupplung (18) versehen ist.

15. Griff nach einem der vorstehenden Ansprüche, **dadurch gekennzeichnet, dass** die Beleuchtungsvorrichtung (10; 30; 40) von der Außenseite eingeführt und in einer Querrichtung (20) in Bezug auf die Position einer Außenfläche der Tür (2) am Rahmen (1) befestigt werden kann.

16. Griff nach einem der vorstehenden Ansprüche, **dadurch gekennzeichnet, dass** in der Beleuchtungsvorrichtung (40) eine erste Leuchte (42), die längs der Mittelebene des Hebels (5) angeordnet ist, und eine zweite Leuchte (42'), die auf einer Seite dieser Ebene angeordnet ist, untergebracht sind.

17. Griff, der einen Hebel (5) und einen Rahmen (1) umfasst, wobei sich der Hebel (5) in Bezug auf den Rahmen (1), der an der Tür (2) eines Fahrzeugs zu befestigen ist, drehen kann, wobei der Rahmen (1) mit einer Beleuchtungsvorrichtung (10; 30; 40) zum Ausleuchten eines Raumes um den Griff (2) versehen ist, **dadurch gekennzeichnet, dass** die Beleuchtungsvorrichtung (10; 30; 40) mit einem äußeren Abschnitt (10a) versehen ist, der zumindest teilweise in einer Aufnahme (11) untergebracht ist, die in dem Hebel (5) ausgeführt ist, wobei der Hebel (5) wenigstens zwei Lichtleiter (45, 45', 45") umfasst, die nebeneinander angeordnet sind, um das von der Beleuchtungsvorrichtung (42) emittierte Licht zu übertragen.

18. Griff nach dem vorstehenden Anspruch, **dadurch gekennzeichnet, dass** der Hebel (5) drei Lichtleiter (45, 45', 45") umfasst, die jeweils nach unten und nach oben zu einer in der Tür (2) ausgeführten Aussparung (8) und/oder der Aussparung (9) des Hebels (5) hin gerichtet sind.

19. Griff nach dem vorstehenden Anspruch, **dadurch gekennzeichnet, dass** der Hebel (5) mit einer lichtundurchlässigen Abdeckung (46) versehen ist, die mit wenigstens einem Fenster (47) versehen ist, das in Übereinstimmung mit einem Lichtleiter (45') angeordnet ist.

## Revendications

1. Poignée comprenant un levier (5) et un cadre (1), le levier (5) étant rotatif par rapport au cadre (1) pour être fixé à la portière (2) d'un véhicule, le cadre (1) étant pourvu d'un dispositif d'éclairage (10 ; 30 ; 40) pour illuminer un espace autour de la poignée (2), **caractérisée en ce que** le dispositif d'éclairage (10 ; 30 ; 40) est pourvu d'une partie extérieure (10a) qui est reçue au moins partiellement dans un logement (11) réalisé dans le levier (5), la partie extérieure (10a) du dispositif d"éclairage (10) étant agencée au moins partiellement dans un évidement (9) qui est réalisé dans le levier (5) et agencé entre le cadre (1) et le levier (5), la partie extérieure (10a) du dispositif d'éclairage (10) étant pourvue d'au moins une lampe (12) qui fait saillie dans l'évidement (9) du levier (5), et le dispositif d'éclairage (10 ; 30) étant fixé au cadre (1) au moyen d'un couplage par encliquetage (17 ; 31).

2. Poignée selon la revendication précédente, **caractérisée en ce que** l'axe de rotation du levier (5) est sensiblement parallèle à l'axe de rotation de la portière (2).

3. Poignée selon la revendication précédente, **caractérisée en ce que** le dispositif d'éclairage (10 ; 30) est fixé au cadre (1) de manière amovible.

4. Poignée selon l'une des revendications précédentes, **caractérisée en ce que** le logement (11) du levier (5) pour le dispositif d'éclairage (10 ; 30 ; 40) est ouvert en direction du cadre (1).

5. Poignée selon l'une des revendications précédentes, **caractérisée en ce que** le dispositif d'éclairage (10 ; 30 ; 40) est agencé entre le point d'appui (3) et le milieu du levier (5).

6. Poignée selon l'une des revendications précédentes, **caractérisée en ce que** le levier (5) est symétrique par rapport à un plan médian longitudinal.

7. Poignée selon la revendication précédente, **caractérisée en ce que** le dispositif d'éclairage (10 ; 30 ; 40) est traversé par le plan médian.

8. Poignée selon l'une des revendications précédentes, **caractérisée en ce qu'**au moins une partie du boîtier du dispositif d'éclairage (10 ; 30 ; 40) est transparente.

9. Poignée selon l'une des revendications précédentes, **caractérisée en ce que** le dispositif d'éclairage (10 ; 30 ; 40) est pourvu d'au moine une lampe (12 ; 32 ; 42 ; 42') qui est montée sur une plaque (13 ; 33 ; 43).

10. Poignée selon la revendication précédente, **caractérisée en ce que** la plaque (13) est sensiblement parallèle au plan médian longitudinal du levier (5).

11. Poignée selon la revendication précédente, **caractérisée en ce que** la lumière (19) émise par le dispositif d'éclairage (10) est tournée uniquement vers un côté du plan médian.

12. Poignée selon la revendication 9, **caractérisée en ce que** la plaque (33 ; 43) est sensiblement perpendiculaire au plan médian longitudinal du levier (5).

13. Poignée selon l'une des revendications précédentes, **caractérisée en ce que** le dispositif d'éclairage (10 ; 30) est pourvu d'une prise mâle (15 ; 35) apte à être couplée électriquement et mécaniquement à une prise femelle (16 ; 36).

14. Poignée selon la revendication précédente, **caractérisée en ce que** la prise femelle (16) est pourvue d'un couplage par encliquetage (18) pour être fixée au cadre (1).

15. Poignée selon l'une des revendications précédentes, **caractérisée en ce que** le dispositif d'éclairage (10 ; 30 ; 40) est apte à être inséré depuis l'extérieur et à être fixé au cadre (1) dans un sens transversal (20) par rapport à la position de la surface extérieure de la portière (2).

16. Poignée selon l'une des revendications précédentes, **caractérisée en ce que** le dispositif d'éclairage (40) loge une première lampe (42) agencée le long du plan médian du levier (5) et une deuxième lampe (42') agencée d'un côté de ce plan.

17. Poignée comprenant un levier (5) et un cadre (1), le levier (5) étant rotatif par rapport au cadre (1) pour être fixé à la portière (2) d'un véhicule, le cadre (1) étant pourvu d'un dispositif d'éclairage (10 ; 30 ; 40) pour illuminer un espace autour de la poignée (2), **caractérisée en ce que** le dispositif d'éclairage (10 ; 30 ; 40) est pourvu d'une partie extérieure (10a) qui est reçue au moins partiellement dans un logement (11) réalisé dans le levier (5), le levier (5) comprenant au moins deux guides optiques (45, 45', 45") agencés côte à côte pour transmettre la lumière émise par le dispositif d'éclairage (42).

18. Poignée selon la revendication précédente, **caractérisée en ce que** le levier (5) comprend trois guides optiques (45, 45', 45") tournés vers un évidement (8) réalisé dans la portière (2) et/ou l'évidement (9) du levier (5) vers le bas et le haut, respectivement.

19. Poignée selon la revendication précédente, **caractérisée en ce que** le levier (5) est pourvu d'un couvercle opaque (46) qui est pourvu d'au moins une fenêtre (47) agencée en correspondance avec un guide optique (45').
